# EUROPEAN PATENT APPLICATION

(11) **EP 3 217 309 A1**
(43) Date of publication of application: **13.09.2017**
(21) Application number: 15857126.5
(22) Date of filing: 06.11.2015
(51) Int. Cl.: G06F 21/56

(54) **PROTECTIVE SYSTEM, DEVICE, AND METHOD FOR PROTECTING ELECTRONIC COMMUNICATION DEVICE**

(30) Priority: 07.11.2014 KR 20140154668
(71) Applicant: Park, Suhjun, Seogwipo-si Jeju-do 63568 (KR)
(72) Inventor: Park, Suhjun, Seogwipo-si Jeju-do 63568 (KR)
(74) Representative: Algemeen Octrooi- en Merkenbureau B.V.
(86) International application number: PCT/KR2015/011906
(87) International publication number: WO 2016/072790

(57) **Abstract**

The present invention relates to a protective system, apparatus, and method for protecting an electronic communication device of a user and also relates to a protective system, apparatus, and method for protecting an electronic communication device of a user, the system, apparatus, and method being capable of safely executing at least one of execution data included in a target message received from the outside or execution data of an external device linked by a hyperlink included in the target message, transmitting an execution output, which is a result of executing the execution data, to the electronic communication device, and displaying the transmitted execution output in order to protect the electronic communication device, thus enabling the electronic communication device to check details of the execution data of the target message received from the outside at the same time as preventing an exposure to malware while the electronic communication device checks the target message.

## Description

### [TECHNICAL FIELD]

The present invention relates to a method and apparatus for protecting an electronic communication device capable of transmitting and receiving messages through communication from malware included in the messages, and more particularly, to a method and apparatus for protecting an electronic communication device that may enable an external server to execute execution data of a target message including malware or execution data of an external device linked by a hyperlink by transmitting the execution data to the external server or enable an internal closed module to execute the execution data and receive and then receive only a result of the execution.

### [BACKGROUND ART]

Recently, along with the rapid development of IT technology, various electronic devices, including electronic communication devices, have been commercialized. Electronic communication devices include various electronic devices such as a smartphone, a tablet PC, a desktop PC, and a wearable PC. Such electronic communication devices transmit and receive information to or from the outside through communication.

Such electronic communication devices include a default function to transmit and receive data to and from the outside. Accordingly, electronic communication devices are always exposed to malicious code infections and virus infections originated from the outside. In order to solve this problem, antivirus programs or antimalware programs are being used. Recently, a method of protecting an electronic communication device from malware by applying such vaccine programs is being used even for portable electronic communication devices such as a smartphone.

However, there are many cases in which when an electronic communication device receives an executable file or an external hyperlink including malware through an electronic document or message, the malware affects the electronic communication device by a user of the electronic communication device executing the executable file or execution data of an external device linked by the hyperlink.

Accordingly, there is an increasing need for a method of protecting an electronic communication device from a message including an execution file or hyperlink including malware.

### [DETAILED DESCRIPTION OF THE INVENTION]

### [TECHNICAL PROBLEM]

The present invention is directed to providing a method and apparatus for protecting an electronic communication device, the method and apparatus being capable of checking details of a target message received from the outside at the same time as preventing an exposure to malware while the electronic communication device checks the target message.

The present invention is also directed to providing a method and apparatus for protecting an electronic communication device, the method and apparatus being capable of checking details of a target message including execution data by transmitting the target message to a service providing server, removing malware from the execution data of the target message by the service providing server, and executing the execution data of the target message from which the malware has been removed.

The present invention is also directed to providing an apparatus and method for checking details of a target message including execution data by an electronic communication device by transmitting the execution data to an internal closed module of the electronic communication device and executing the execution data by the closed module.

The objects of the present invention are not limited to the above-mentioned objects, and other objects thereof will be clearly understandable by those skilled in the art from the following descriptions.

### [TECHNICAL SOLUTION]

In order to solve the above-mentioned objects, the present invention may be carried out by the following embodiments.

According to an aspect of the present invention, there is provided a protective electronic device including a communication unit configured to receive at least one of intra-message execution data and a hyperlink by which execution data of an external device is linked, which are included in a target message received by an electronic communication device and executable by the electronic communication device, from the electronic communication device and a processing unit configured to execute the intra-message execution data received through the communication unit or the execution data of the external device linked by the hyperlink received through the communication unit, instead of the electronic communication device.

The processing unit may transmit an execution output, which is a result of executing the intra-message execution data or the execution data of the external device linked by the hyperlink instead of the electronic communication device, back to the electronic communication device through the communication unit.

When the target message includes the intra-message execution data, the execution output transmitted to the electronic communication device as the result of executing the intra-message execution data may be the same as a result of the electronic communication device executing the intra-message execution data.

When the target message includes the hyperlink, the execution output transmitted to the electronic communication device as the result of executing the execution data of the external device linked by the hyperlink may be the same as a result of the electronic communication device executing the execution data of the external device linked by the hyperlink.

The execution output may be at least one of character data, number data, figure data, image data, video data, sound data, and vibration data.

The processing unit may include a safety module, and the safety module may be blocked or restricted from transmitting data when the safety module executes the intra-message execution data or the execution data of the external device linked by the hyperlink.

The processing unit may include a determination module configured to determine whether there is malware in the intra-message execution data or the execution data of the external device linked by the hyperlink.

The processing unit may include an anti-malware module configured to remove the malware, the processing unit may remove the malware when the malware is present in the intra-message execution data, and the communication unit may transmit a treated execution output, which is a result of executing the execution data from which the malware has been removed, to the electronic communication device.

The processing unit may include an anti-malware module configured to remove the malware, the processing unit may remove the malware when the malware is present in the execution data of the external device linked by the hyperlink, and the communication unit may transmit a treated execution output, which is a result of executing the execution data from which the malware has been removed, to the electronic communication device.

The processing unit may include a user environment module, which is a system execution environment based on an execution environment of the electronic communication device, and the user environment module may execute the intra-message execution data or the execution data of the external device linked by the hyperlink.

The intra-message execution data or the hyperlink received through the communication unit may be execution data or a hyperlink that is designated to be transmitted to the protective electronic device by a user of the electronic communication device.

The protective electronic device may be a service providing server configured to provide a service for protecting the electronic communication device from malware.

When the target message includes the intra-message execution data, the execution output transmitted to the electronic communication device as the result of executing the intra-message execution data may be at least partially the same as a result of the electronic communication device executing the intra-message execution data, and when the target message includes the hyperlink, the execution output transmitted to the electronic communication device as the result of executing the execution data of the external device linked by the hyperlink may be at least partially the same as a result of the electronic communication device executing the execution data of the external device linked by the hyperlink.

According to another aspect of the present invention, there is provided an electronic communication device including a communication unit configured to receive a target message including intra-message execution data and a hyperlink by which execution data of an external device is linked, which are executable by the electronic communication device; and a processing unit configured to perform a process of transmitting at least one of the intra-message execution data and the hyperlink by which the execution data of the external device is linked by a protective electronic device.

The processing unit may perform a process of receiving an execution output, which is a result of executing the intra-message execution data or the execution data of the external device linked by the hyperlink instead of the electronic communication device, from the protective electronic device.

When the target message includes the intra-message execution data, the execution output, which is the result of executing the intra-message execution data, may be the same as a result of the electronic communication device executing the intra-message execution data, and when the target message includes the hyperlink, the execution output, which is the result of executing the execution data of the external device linked by the hyperlink, may be the same as a result of the electronic communication device executing the execution data of the external device linked by the hyperlink.

When the target message includes the intra-message execution data, the execution output, which is the result of executing the intra-message execution data, may be at least partially the same as a result of the electronic communication device executing the intra-message execution data, and when the target message includes the hyperlink, the execution output, which is the result of executing the execution data of the external device linked by the hyperlink, may be at least partially the same as a result of the electronic communication device executing the execution data of the external device linked by the hyperlink.

The execution output may be at least one of character data, number data, figure data, image data, video data, sound data, and vibration data.

According to another aspect of the present invention, there is provided an electronic communication device including a communication unit configured to receive a target message including intra-message execution data and a hyperlink by which execution data of an external device is linked, which are executable by the electronic communication device; and a closed module configured to execute at least one of the intra-message execution data and the execution data of the external device linked by the hyperlink, wherein a processing unit of the closed module instead of a processing unit of the electronic communication device executes at least one of the intra-message execution data and the execution data of the external device linked by the hyperlink.

The closed module of the electronic communication device may be blocked or restricted from transmitting data to other modules of the electronic communication device when the closed module executes the at least one of the intra-message execution data and the execution data of the external device linked by the hyperlink.

When the target message includes the intra-message execution data, the execution output, which is the result of executing the intra-message execution data, may be at least partially the same as a result of the electronic communication device executing the intra-message execution data, and when the target message includes the hyperlink, the execution output, which is the result of executing the execution data of the external device linked by the hyperlink, may be at least partially the same as a result of the electronic communication device executing the execution data of the external device linked by the hyperlink.

The execution output may be at least one of character data, number data, figure data, image data, video data, sound data, and vibration data.

According to another aspect of the present invention, there is provided a protective module for protecting an electronic communication device, the protective module including a communication unit configured to receive at least one of intra-message execution data and a hyperlink by which execution data of an external device is linked, which are included in a target message received by the electronic communication device and executable by the electronic communication device, from the electronic communication device; and a processing unit configured to execute at least one of the intra-message execution data received through the communication unit and the execution data of the external device linked by the hyperlink received through the communication unit, instead of the electronic communication device.

The processing unit may transmit an execution output, which is a result of executing the intra-message execution data or the execution data of the external device linked by the hyperlink instead of the electronic communication device, to the electronic communication device other than the protective module.

The processing unit may include a safety module, and the safety module may be blocked or restricted from transmitting data when the safety module executes the intra-message execution data or the execution data of the external device linked by the hyperlink.

When the target message includes the intra-message execution data, the execution output transmitted to the electronic communication device as the result of executing the intra-message execution data may be the same as a result of the electronic communication device executing the intra-message execution data.

When the target message includes the hyperlink, the execution output transmitted to the electronic communication device as the result of executing the execution data of the external device linked by the hyperlink may be the same as a result of the electronic communication device executing the execution data of the external device linked by the hyperlink.

When the target message includes the intra-message execution data, the execution output, which is the result of executing the intra-message execution data, may be at least partially the same as a result of the electronic communication device executing the intra-message execution data, and when the target message includes the hyperlink, the execution output, which is the result of executing the execution data of the external device linked by the hyperlink, may be at least partially the same as a result of the electronic communication device executing the execution data of the external device linked by the hyperlink.

The execution output may be at least one of character data, number data, figure data, image data, video data, sound data, and vibration data.

According to another aspect of the present invention, there is provided a method of protecting an electronic communication device, the method including receiving, by a protective electronic device, at least one of intra-message execution data and a hyperlink by which execution data of an external device is linked, which are included in a target message received by the electronic communication device, from the electronic communication device; and executing, by the protective electronic device instead of the electronic communication device, at least one of the intra-messages execution data and the execution data of the external device linked by the hyperlink.

The method may further include transmitting an execution output, which is a result of executing the intra-message execution data or the execution data of the external device linked by the hyperlink instead of the electronic communication device, back to the electronic communication device.

When the target message includes the intra-message execution data, the execution output may be the same as a result of the electronic communication device executing the intra-message execution data, and when the target message includes the hyperlink, the execution output may be the same as a result of the electronic communication device executing the execution data of the external device linked by the hyperlink.

The execution output may be at least one of character data, number data, figure data, image data, video data, sound data, and vibration data.

The executing may include executing, by a safety module of the protective electronic device, the intra-message execution data or the execution data of the external device linked by the hyperlink, wherein the safety module of the protective electronic device is blocked or restricted from transmitting data to other modules of the protective electronic device when the safety module of the protective electronic device executes the intra-message execution data or the execution data of the external device linked by the hyperlink.

The method may further include determining, by the protective electronic device, whether there is malware in the intra-message execution data or the execution data of the external device linked by the hyperlink.

The method may further include, when the malware is present in the intra-message execution data, removing the malware; and transmitting a treated execution data, which is a result of executing the execution data from which the malware has been removed, to the electronic communication device.

The method may further include, when the malware is present in the execution data of the external device linked by the hyperlink, removing the malware; and transmitting a treated execution data, which is a result of executing the execution data of the external device linked by the hyperlink from which the malware has been removed, to the electronic communication device.

The executing by the protective electronic device may be performed by a user environment module of the protective electronic device, which is a system execution environment based on an execution environment of the electronic communication device.

The intra-message execution data or the hyperlink may be execution data or a hyperlink that is designated to be transmitted to the protective electronic device by a user of the electronic communication device.

When the target message includes the intra-message execution data, the execution output may be at least partially the same as a result of the electronic communication device executing the intra-message execution data, and when the target message includes the hyperlink, the execution output may be at least partially the same as a result of the electronic communication device executing the execution data of the external device linked by the hyperlink.

According to another aspect of the present invention, there is provided a method of protecting an electronic communication device, the method including receiving a target message from an electronic communication device having a communication function; and transmitting at least one of intra-message execution data and a hyperlink by which execution data of an external device is linked, which are included in the target message and executable by the electronic communication device, to a protective electronic device without executing the intra-message execution data or the hyperlink.

The method may further include receiving an execution output, which is a result of the protective electronic device instead of the electronic communication device executing the intra-message execution data or the execution data of the external device linked by the hyperlink, from the protective electronic device.

When the target message includes the intra-message execution data, the execution output, which is the result of executing the intra-message execution data, may be the same as a result of the electronic communication device executing the intra-message execution data.

When the target message includes the hyperlink, the execution output, which is the result of executing the execution data of the external device linked by the hyperlink, may be the same as a result of the electronic communication device executing the execution data of the external device linked by the hyperlink.

The execution output may be at least one of character data, number data, figure data, image data, video data, sound data, and vibration data.

The method may further include receiving, by the electronic communication device, whether to transmit the intra-message execution data or the hyperlink by which the execution data of the external device is linked by the protective electronic device.

According to another aspect of the present invention, there is provided a method of protecting an electronic communication device, the method including receiving, by an electronic communication device having a closed module, a target message; transmitting at least one of intra-message execution data and a hyperlink by which external data of an external device is linked, which are included in the target message and executable by the electronic communication device, to the closed module of the electronic communication device; and executing, by the closed module of the electronic communication device instead of a processing unit of the electronic communication device, at least one of the intra-message execution data and the execution data of the external device linked by the hyperlink.

The method may further include transmitting, by the closed module of the electronic communication device, an execution output, which is a result of the closed module executing the intra-message execution data or the execution data of the external device linked by the hyperlink, to the outside of the closed module of the electronic communication device.

The closed module of the electronic communication device may be blocked or restricted from transmitting data to other modules of the electronic communication device when the closed module executes the intra-message execution data or the execution data of the external device linked by the hyperlink.

According to another aspect of the present invention, there is provided a method of protecting an electronic communication device, the method including receiving at least one of intra-message execution data and a hyperlink by which execution data of an external device is linked, which are included in a target message received by the electronic communication device and executable by the electronic communication device, from the electronic communication device; and executing at least one of the intra-message execution data received from the electronic communication device and the execution data of the external device linked by the hyperlink received from the electronic communication device, instead of the electronic communication device.

The method may further include transmitting an execution output, which is a result of executing the intra-message execution data or the execution data instead of the electronic communication device, to the electronic communication device other than a protective module.

According to another aspect of the present invention, there is provided a protective system including an electronic communication device including a communication unit and a processing unit; and a protective electronic device including a communication unit and a processing unit, wherein the communication unit of the electronic communication device receives a target message, the processing unit of the electronic communication device does not execute intra-message execution data and a hyperlink by which execution data of an external device is linked, which are included in the target message and executable by the electronic communication device, and performs a process of transmitting at least one of the intra-message execution data and the hyperlink by which the execution data of the external device is linked to the protective electronic device, the communication unit of the protective electronic device receives the at least one of the intra-message execution data and the hyperlink by which the execution data of the external device is linked from the electronic communication device, and the processing unit of the protective electronic device instead of the electronic communication device executes the intra-message execution data received from the electronic communication device and the execution data of the external device linked by the hyperlink received from the electronic communication device.

The processing unit of the electronic communication device may perform a process of receiving an execution output, which is a result of the protective electronic device instead of the electronic communication device executing the intra-message execution data or the execution data of the external device linked by the hyperlink, from the protective electronic device.

According to another aspect of the present invention, there is provided a protective system including an electronic communication device including a communication unit and a processing unit, wherein the communication unit of the electronic communication device receives a target message including intra-message execution data or a hyperlink by which execution data of an external device is linked, which is executable by the electronic communication device, a closed module of the electronic communication device executes at least one of the intra-message execution data and the execution data of the external device linked by the hyperlink, and a processing unit of the closed module instead of the processing unit of the electronic communication device executes the at least one of the intra-message execution data and the execution data of the external device linked by the hyperlink.

The closed module of the electronic communication device may be blocked or restricted from transmitting data to other modules of the electronic communication device when the closed module executes the at least one of the intra-message execution data and the execution data of the external device linked by the hyperlink.

According to another aspect of the present invention, there is provided a protective system including a communication unit and a processing unit, wherein the communication unit of the protective system receives at least one of intra-message execution data and a hyperlink by which execution data of an external device is linked, which are included a target message received by an electronic communication device and executable by the electronic communication device, and the processing unit of the protective system instead of the electronic communication device executes at least one of the intra-message execution data received through the communication unit and the execution data of the external device linked by the hyperlink received through the communication unit.

The processing unit may transmit an execution output, which is a result of executing the intra-message execution data or the execution data of the external device linked by the hyperlink instead of the electronic communication device, to the electronic communication device other than the protective module.

According to another aspect of the present invention, there is provided a computer-readable recording medium having a program for protecting an electronic communication device stored therein, wherein a protective electronic device receives at least one of intra-message execution data and a hyperlink by which execution data of an external device is linked, which are included in a target message received by the electronic communication device and executable by the electronic communication device, from the electronic communication device, and the protective electronic device instead of the electronic communication device executes at least one of the intra-messages execution data and the execution data of the external device linked by the hyperlink.

The protective electronic device may transmit an execution output, which is a result of the protective electronic device instead of the electronic communication device executing the intra-message execution data or the execution data of the external device linked by the hyperlink, to the electronic communication device.

According to another aspect of the present invention, there is provided a computer-readable recording medium having a program for protecting an electronic communication device stored therein, wherein an electronic communication device receives a target message including intra-message execution data and a hyperlink by which execution data of an external device is linked, which are executable by the electronic communication device, and the electronic communication device transmits at least one of the intra-message execution data and the hyperlink by which the execution data of the external device is linked by a protective electronic device.

The protective electronic device may perform a process of enabling the electronic communication device to receive an execution output, which is a result of the protective electronic device instead of the electronic communication device executing the intra-message execution data or the execution data of the external device linked by the hyperlink.

According to an aspect of the present invention, there is provided a computer-readable recording medium having a program for protecting an electronic communication device stored therein, wherein an electronic communication device receives a target message including intra-message execution data and a hyperlink by which execution data of an external device is linked, which are executable by the electronic communication device, the electronic communication device includes a closed module configured to execute at least one of the intra-message execution data and the execution data of the external device linked by the hyperlink, and a processing unit of the closed module instead of a processing unit of the electronic communication device executes at least one of the intra-message execution data and the execution data of the external device linked by the hyperlink.

The closed module of the electronic communication device may be blocked or restricted from transmitting data to other modules of the electronic communication device when the closed module executes the at least one of the intra-message execution data and the execution data of the external device linked by the hyperlink.

According to another aspect of the present invention, there is provided a computer-readable recording medium having a program for protecting an electronic communication device stored therein, wherein a protective module receives at least one of intra-message execution data and a hyperlink by which execution data of an external device is linked, which are included in a target message received by the electronic communication device and executable by the electronic communication device, from the electronic communication device, and the protective module instead of the electronic communication device executes at least one of the received intra-messages execution data and the execution data of the external device linked by the received hyperlink.

The protective module may transmit an execution output, which is a result of the protective module instead of the electronic communication device executing the intra-message execution data or the execution data of the external device linked by the hyperlink, to the electronic communication device other than the protective module.

Details of the above embodiments are included in the detailed description and drawings.

### [ADVANTAGEOUS EFFECTS OF THE INVENTION]

The present invention can provide a method and apparatus for protecting an electronic communication device, the method and apparatus being capable of checking details of a target message received from the outside at the same time as preventing an exposure to malware while the electronic communication device checks the target message.

The present invention can provide a method and apparatus for protecting an electronic communication device, the method and apparatus being capable of checking details of a target message including execution data by transmitting the target message to a service providing server, removing malware from the execution data of the target message in the service providing server, and executing the execution data of the target message from which the malware has been removed.

The present invention can provide an apparatus and method for checking details of a target message including execution data by an electronic communication device by transmitting the execution data to an internal closed module of the electronic communication device and executing the execution data by the closed module.

The advantageous effects of the present invention are not limited to the above description, and other various effects are contained in this specification.

### [DESCRIPTION OF THE DRAWINGS]

FIG. 1 is a block diagram of an electronic communication device and a service providing server according to an embodiment of the present invention.
FIG. 2 is an operational flowchart for protecting an electronic communication device, which is associated with an electronic communication device and a service providing server according to an embodiment of the present invention, in a way in which the electronic communication device transmits execution data of a received target message to the service providing server and the service providing server executes the execution data and transmits a result of the execution back to the electronic communication device.
FIGS. 3A and 3B show user interfaces (UIs) of an electronic communication device for a case in which execution data is included in a target message according to an embodiment of the present invention.
FIGS. 4A and 4B show UIs of an electronic communication device for a case in which a hyperlink is included in a target message according to an embodiment of the present invention.
FIG. 5 is a block diagram of a service providing server including a safety module and a processing unit of the safety module according to another embodiment of the present invention.
FIG. 6 is a block diagram of a service providing server including a user environment module and a processing unit of the user environment module according to another embodiment of the present invention.
FIG. 7 is a block diagram of an electronic communication device including a closed module and a processing unit of the closed module according to another embodiment of the present invention.
FIG. 8 is a block diagram of a protective module including a processing unit according to another embodiment of the present invention.

### [MODE OF THE INVENTION]

Advantages and features of the present invention and methods of accomplishing the same will be apparent by referring to embodiments described below in detail in connection with the accompanying drawings. The invention may, however, be embodied in different forms and should not be construed as limited to the embodiments set forth herein. Rather, these embodiments are provided so that this disclosure will be thorough and complete, and will fully convey the scope of the present invention to those skilled in the art. Therefore, the scope of the invention is defined only by the appended claims.

Although the terms first, second, etc. may be used herein to describe various elements, it will be appreciated that these elements should not be limited by these terms. These terms are used only to distinguish one element from another element. Thus, it will be appreciated that a first element discussed below could be termed a second element without departing from the technical spirit of the present invention.

In this specification, when any element transmits data or signals to another element, the element may transmit the data or signals to the other element directly or via at least one still other element.

Each block may represent a module, segment, or portion of code, which includes one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

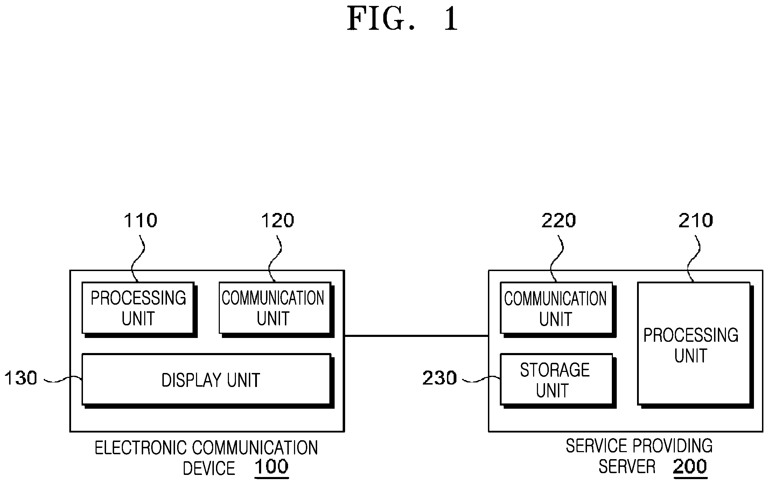

FIG. 1 is a block diagram of an electronic communication device and a service providing server according to an embodiment of the present invention.

Referring to FIG. 1, an electronic communication device 100 includes a processing unit 110, a communication unit 120, and a display unit 130, and the service providing server 200 includes a processing unit 210, a communication unit 220, and a storage unit 230.

FIG. 1 shows a block diagram of a system in which the service providing server for protecting the electronic communication device 100 executes execution data of a target message received by the electronic communication device 100 and transmits a result of the execution back to the electronic communication device 100 according to an embodiment of the present invention.

The term "target message" used herein refers to a message that is received by the electronic communication device 100 and suspected of including malware. The term "suspected message" refers to a message that includes execution data or a hyperlink. That is, the target message indicates any message that includes data requiring operations in the electronic communication device 100 other than simple text information.

The term "execution data" used therein refers to data that may be executed by the electronic communication device 100 or the service providing server 200. The term "hyperlink" used herein refers to a reference link that is included in a target message and capable of connecting any format of data. That is, a hyperlink may designate character data, number data, figure data, sound data, video data, text data, music data, image data, a program, a file, and so on of an external device and thus may be connected with execution data of the external device.

The term "execution output" used therein refers to an indication of a result of the service providing server 200 executing execution data in a message (hereinafter also referred to as intra-message execution data) or execution data of an external device. When a target data includes execution data, an execution output may be an output data copy of a result of executing the intra-message execution data. In this case, the output data copy is output data that is transmitted from the service providing server 200 to the electronic communication device 100. When a target data includes a hyperlink, an execution output may be an output data copy of a result of executing execution data of an external device linked by the hyperlink. In this case, the output data copy is output data that is transmitted from the service providing server 200 to the electronic communication device 100. The output data copy may be at least one of character data, number data, figure data, sound data, image data, video data, voice data, and vibration data.

The electronic communication device 100 indicates a device that may transmit and receive data to and from other electronic communication device or the service providing server 200. Also, the electronic communication device 100 may process a variety of information, deliver information to a user of the electronic communication device 100 using characters, images, voice, vibration, etc., and transmit and receive data including characters, images, and voice to and from other electronic communication device or the service providing server 200. Such an electronic communication device 100 may include various devices such as a desktop PC, a notebook PC, a mobile PC, a smartphone, and a tablet PC, but is not limited thereto.

The communication unit 120 of the electronic communication device 100 transmits and receives information through communication with other electronic communication devices or the service providing server 200. For example, the communication unit 120 may receive a target message from another electronic communication device. Also, the communication unit 120 transmits the intra-message execution data to the service providing server 200 and receives an execution output, which is a result of executing the intra-message execution data, from the service providing server 200. The communication unit 120 may be implemented to serve as both a transmission unit that may transmit data and a reception unit that may receive data. The communication unit 120 may use, for example, wireless Internet technology, short-range communication technology, etc. as a method of communicating with other electronic communication devices or the service providing server 200.

The processing unit 110 of the electronic communication device 100 processes data received through the communication unit 120. The processing unit 110 determines whether executable execution data or an executable hyperlink is included in the target message. Also, the processing unit 110 may execute the intra-message execution data included in the target message or execution data of an external device linked by the hyperlink included in the target message and may execute the execution output received from the service providing server 200. Then, the processing unit 110 may execute the execution data or the execution output and display an output appropriate for a format of the execution data or a format of the execution output on the display unit 130. For example, when the format of the execution data or the format of the execution output is a video, the processing unit 110 plays a corresponding video. When the format of the execution data or the format of the execution output is a voice, the processing unit 110 plays a corresponding voice. The processing unit 110 displays an image or a character when the format of the execution data or the format of the execution output is an image or a character. Also, the processing unit 110 controls an overall operation of the electronic communication device 100. For example, the processing unit 110 performs controls and processes associated with a voice call, data communication, media replay, internal data processing, and internal module control.

The display unit 130 of the electronic communication device 100 displays information that can be represented in the output format. The display unit 130 displays a result of executing the execution output transmitted from the service providing server 200. However, when the execution output is a video including a voice, the display unit 130 may display the video, and a voice output unit (not shown) may play the voice although not shown herein.

The service providing server 200 is an apparatus for transmitting and receiving data to and from the electronic communication device 100. The service providing server 200 may receive and execute an intra-message execution data, a hyperlink, and execution data of an external device linked by a hyperlink. The service providing server 200 may store data transmitted or received to or from the electronic communication device 100. Herein, the service providing server 200 includes, despite its name, any kind of protective electronic device that communicates with the electronic communication device 100 in substantially the same way as that of the service providing server.

The communication unit 220 of the service providing server 200 communicates with the electronic communication device 100. The communication unit 220 receives execution data or a hyperlink from the electronic communication device 100 and transmits an execution output, which is a result of executing an intra-message execution data or execution data of an external device linked by the hyperlink, to the electronic communication device 100. The communication unit 220 may be implemented to serve as both a transmission unit that may transmit data and a reception unit that may receive data.

The storage unit 230 of the service providing server 200 stores a program or data to be processed and controlled by the service providing server 200. The storage unit 230 stores the intra-message execution data or hyperlink received from the electronic communication device 100. Also, the storage unit 230 may store the execution data of the external device linked by the hyperlink. However, the present invention is not limited thereto. The storage unit 230 may store all types of data that may be processed by the processing unit 210, and the data may be received from the electronic communication device 100 through the communication unit 220.

The processing unit 210 of the service providing server 200 executes the inter-message execution data, the hyperlink, or the execution data of the external data linked by the hyperlink. Also, the processing unit 210 executes the intra-message execution data and the execution data of the external device linked by the hyperlink and generates an execution output, which is s result of executing the intra-message execution data or the execution data of the external device linked by the hyperlink. For example, when the intra-message execution data and the execution data of the external device linked by the hyperlink are video data, the execution output may be a video copy, which is a result of executing the execution data.

For convenience of description, FIG. 1 shows the processing unit 110, the communication unit 120, the display unit 130, the processing unit 210, the communication unit 220, and the storage unit 230 as separate elements. However, the elements may be combined with or separated from each other when the present invention is implemented.

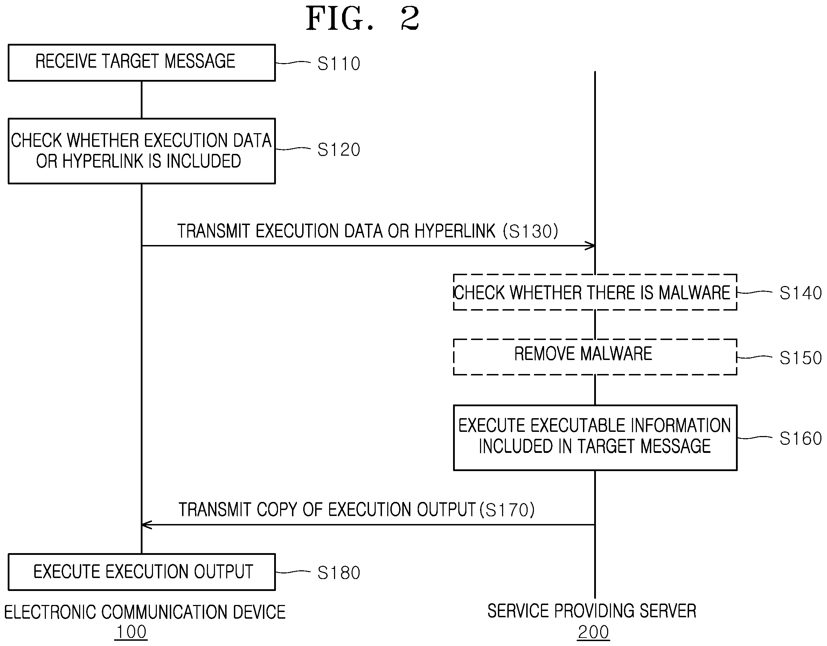

A method of protecting the electronic communication device 100 in which when an intra-message execution data or a hyperlink is included in a target message, the electronic communication device 100 transmits the intra-message execution data or the hyperlink to the service providing server 200, the service providing server 200 executes the intra-message execution data or execution data of an external device and generates an execution output, transmits the execution output, which is not affected by malware, back to the electronic communication device 100, and then the electronic communication device 100 displays the transmitted execution output will be described below in detail with reference to FIG. 2.

FIG. 2 is an operational flowchart for protecting an electronic communication device, which is associated with an electronic communication device and a service providing server according to an embodiment of the present invention, in a way in which the electronic communication device transmits intra-message execution data or a hyperlink of a received target message to the service providing server and the service providing server executes the intra-message execution data or execution data of an external device linked by the hyperlink and transmits a result of the execution back to the electronic communication device. For convenience of description, the description will be made below with reference to the elements of FIG. 1 and their reference numerals.

First, the electronic communication device 100 receives a target message through the communication unit 120 of the electronic communication device 100 (S110).

The electronic communication device 100 may receive a target message from other electronic communication devices or various servers through the communication unit 120. The target message may include various types of messages such as an SMS text message, an MMS text message, an e-mail, etc. Also, the target message may include execution data or a hyperlink.

Subsequently, the electronic communication device 100 determines whether at least one of the execution data and the hyperlink is included in the target message before executing the target message (S120).

The processing unit 110 of the electronic communication device 100 determines whether the execution data or the hyperlink is included in the target message. In order to determine whether the data included in the target message is execution data, the processing unit 110 may analyze a file extension of data, details of a file, etc. included in the target message. In order to determine whether a hyperlink is included in the target message, the processing unit 110 determines whether a reference link format capable of connecting data of an external device is included in the target message.

When the execution data or the hyperlink is not included in the target message, a procedure for checking the target message ends without a separate procedure. On the other hand, when the execution data or the hyperlink is included, an additional step for protecting the electronic communication device from malware is performed.

The communication unit 120 of the electronic communication device 100 transmits the execution data or hyperlink of the target message to the service providing server 200 (S130).

The communication unit 120 transmits the execution data or hyperlink included in the target message to the service providing server 200. When a plurality of pieces of execution data or a plurality of hyperlinks are included in the target message, all of the plurality of pieces of execution data or the plurality of hyperlinks may be provided to the service providing server 200 or only some of the plurality of pieces of execution data or the plurality of hyperlinks may be transmitted to the service providing server 200.

When the electronic communication device 100 directly executes the execution data or the hyperlink, the electronic communication device 100 is at risk of being affected by malware. Accordingly, in the method of protecting the electronic communication device according to an embodiment of the present invention, the electronic communication device 100 does not execute intra-message execution data or execution data of an external device linked by a hyperlink and may transmit the intra-message execution data or the hyperlink to the service providing server 200.

In some embodiments, before the communication unit 120 of the electronic communication device 100 transmits the execution data or hyperlink to the service providing server 200, whether to transmit the execution data or hyperlink may be determined by a user.

The service providing server 200 executes the executable execution data included in the target message or the execution data of the external device linked by the executable hyperlink included in the target message (S160).

When the intra-message execution data or the execution data of the external device linked by the hyperlink may be stored in the storage unit 230 of the service providing server 200, and the processing unit 210 of the service providing server 200 executes the intra-message execution data or the execution data of the external device linked by the hyperlink to generate an execution output. The generated execution output may be stored in the storage unit 230 of the service providing server 200.

The communication unit 220 of the service providing server 200 transmits the execution output to the communication unit 120 of the electronic communication device 100 (S170).

The communication unit 220 of the service providing server 200 transmits the execution output to the electronic communication device 100 and does not transmit the execution data or the hyperlink received from the electronic communication device 100 back to the electronic communication device 100. For example, the service providing server 200 may execute execution data including a video, generate the video, which is an execution output, and transmit the generated video to the electronic communication device 100.

In some embodiments, when a hyperlink is included in the target message, the service providing server 200 may transmit an execution output of execution data of an external device linked by the hyperlink to the electronic communication device 100.

The processing unit 110 of the electronic communication device 100 executes the execution output (S180).

The processing unit 110 of the electronic communication device 100 executes the execution output generated by the service providing server 200. A result of the execution output may be displayed on the display unit 130 of the electronic communication device 100.

In some embodiments, since the service providing server 200 executes the execution data, the service providing server 200 itself may execute the execution data while the service providing server 200 is protected from malware. Accordingly, after step S130, the service providing server 200 may check whether malware is included in the intra-message execution data or the execution data of the external device linked by the hyperlink (S140).

The processing unit 210 of the service providing server 200 may check whether malware is included in the intra-message execution data or the execution data of the external device linked by the hyperlink that is received from the electronic communication device 100. For example, the processing unit 210 of the service providing server 200 may use at least one of a signature inspection method, a cyclic redundancy check (CRC) inspection method, and a heuristic inspection method to check whether malware is included in the intra-message execution data or the execution data of the external device linked by the hyperlink. However, the present invention is not limited to the above-described inspection method.

In some embodiments, whether malware is included in the target message may be checked by an external device that is different from the service providing server 200. For example, a separate hypervisor that is different from the service providing server 200 may receive execution data or a hyperlink and check whether malware is included in intra-message execution data or execution data of an external device linked by the hyperlink.

In some embodiments, after step S140, when malware is included in the target message, the service providing server 200 may remove the malware (S150).

The processing unit 210 of the service providing server 200 may autonomously remove the malware of the intra-message execution data or the execution data of the external device linked by the hyperlink. Also, as described above, when the separate hypervisor checks whether the malware is included in the target message, anti-malware module is installed in the hypervisor, and the service providing server 200 may remove the malware of the intra-message execution data or the execution data of the external device linked by the hyperlink by requesting the hypervisor to remove the malware.

The service providing server 200 may remove the malware of the intra-message execution data or the execution data of the external device linked by the hyperlink and then execute the intra-message execution data or the execution data of the external device linked by the hyperlink from which the malware has been removed (S160).

The processing unit 210 of the service providing server 200 executes the intra-message execution data or the execution data of the external device linked by the hyperlink from which the malware has been removed to generate a treated execution output. The term "treated execution output" refers to an indication of a result of executing the intra-message execution data or the execution data of the external device linked by the hyperlink from which the malware has been removed.

The communication unit 220 of the service providing server 200 may transmit the treated execution output to the communication unit 120 of the electronic communication device 100 (S170).

The communication unit 220 of the service providing server 200 transmits only the treated execution output to the electronic communication device 100 and does not transmit the execution data or the hyperlink transmitted from the electronic communication device 100 to the service providing server 200 back to the service providing server 200.

In some embodiments, the communication unit 220 of the service providing server 200 may transmit the intra-message execution data or the execution data of the external device linked by the hyperlink from which the malware has been removed to the electronic communication device 100 together with the treated execution output.

The processing unit 110 of the electronic communication device 100 executes the treated execution output (S180).

The processing unit 110 of the electronic communication device 100 may execute the treated execution output and display a result of the treated execution output on the display unit 130 of the electronic communication device 100.

In some embodiments, the processing unit 110 of the electronic communication device 100 may execute the intra-message execution data or the execution data of the external device linked by the hyperlink from which the malware has been removed and may display a result of the intra-message execution data or the execution data of the external device linked by the hyperlink from which the malware has been removed on the display unit 130 of the electronic communication device 100.

In the method of protecting the electronic communication device according to an embodiment of the present invention, the electronic communication device 100 transmits execution data of a target message to the service providing server 200, and the service providing server 200 executes the execution data to generates an execution output and transmits the execution output to the electronic communication device 100. Accordingly, the electronic communication device 100 does not directly execute the intra-message execution data included in the target message, which may include malware, or the execution data of the external device linked by the hyperlink included in the target message, and the service providing server 200 may execute the intra-message execution data or the execution data of the external device linked by the hyperlink to protect the electronic communication device 100 from malware. Also, the service providing server 200 may safely generate an execution output by executing the intra-message execution data included in the target message or the execution data of the external device linked by the hyperlink included in the target message and transmit the execution output to the electronic communication device 100, and the electronic communication device 100 may execute the transmitted execution output to indirectly check details of the target message through the service providing server 200. Thus, a user can check details of the target message at the same time as protecting the electronic communication device 100.

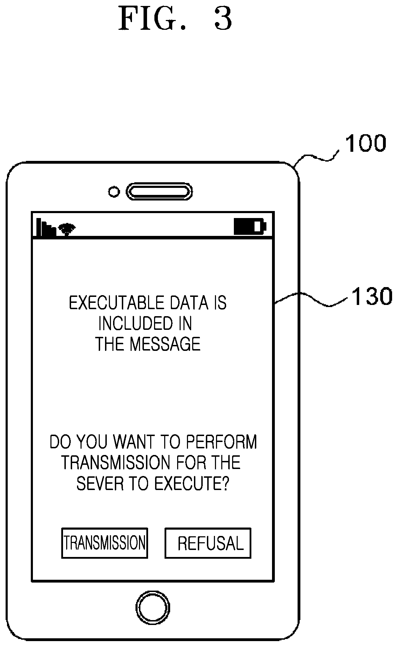

FIGS. 3A and 3B show UIs of an electronic communication device for a case in which execution data is included in a target message according to an embodiment of the present invention.

FIG. 3A shows a UI of the electronic communication device 100 for checking whether to transmit execution data to the service providing server 200 when the execution data is included in a target message received by the electronic communication device 100.

Referring to FIG. 3A, when the execution data is included in the target message, the electronic communication device 100 does not immediately execute the execution data and may ask a user of the electronic communication device 100 whether to transmit the execution data to the service providing server 200. The electronic communication device 100 transmits the execution data to the service providing server 200 when the user of the electronic communication device 100 selects "transmission." The electronic communication device 100 may not transmit the execution data to the service providing server 200 when the user of the electronic communication device 100 selects "refusal." In this case, the electronic communication device 100 may directly execute the execution data of the target message or may end the process of checking the target message rather than executing the execution data of the target message.

FIG. 3B shows a UI of the electronic communication device 100 for a situation in which the electronic communication device 100 transmits execution data of a target message to the service providing server 200 and then receives an execution output, which is a result of executing the execution data, from the service providing server 200.

Referring to FIG. 3B, when the execution data of the target message is video format data and the service providing server 200 transmits an execution output of the execution data to the electronic communication device 100, a standby status in which the electronic communication device 100 is ready to execute a video, which is the execution output, is displayed on the display unit 130 of the electronic communication device 100. When a play button is selected in the standby status, the video, which is the execution output, may be executed by the electronic communication device 100.

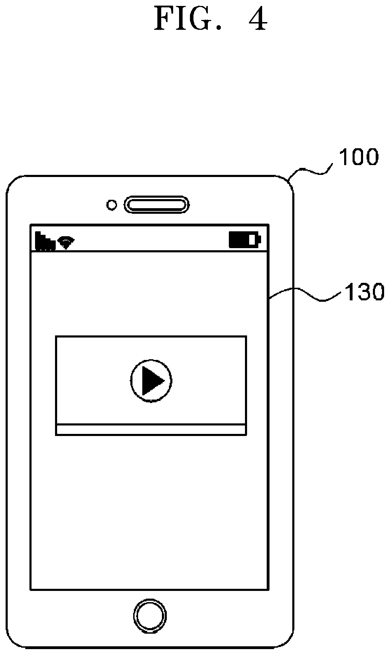

FIGS. 4A and 4B show UIs of an electronic communication device for a case in which a hyperlink is included in a target message according to an embodiment of the present invention.

FIG. 4A shows a UI of the electronic communication device 100 for checking whether to transmit a hyperlink to the service providing server 200 when the hyperlink is included in a target message received by the electronic communication device 100.

Referring to FIG. 4A, when the hyperlink is included in the target message, the electronic communication device 100 does not immediately execute execution data of an external device linked by the hyperlink and may ask a user of the electronic communication device 100 whether to transmit the hyperlink to the service providing server 200. The electronic communication device 100 transmits the hyperlink to the service providing server 200 when the user of the electronic communication device 100 selects "transmission." The electronic communication device 100 may not transmit the hyperlink to the service providing server 200 when the user of the electronic communication device 100 selects "refusal." In this case, the electronic communication device 100 may directly execute the execution data of the external device linked by the hyperlink or may end the process of checking the target message rather than executing the execution data of the external device linked by the hyperlink of the target message.

FIG. 4B shows a UI of the electronic communication device 100 for a situation in which the electronic communication device 100 transmits a hyperlink of a target message to the service providing server 200 and then receives an execution output, which is a result of executing execution data of an external device linked by the hyperlink, from the service providing server 200.

Referring to FIG. 4B, when the execution data of the external device linked by the hyperlink of the target message is video format data and the service providing server 200 transmits an execution output of the execution data of the external device linked by the hyperlink of the target message to the electronic communication device 100, a standby status in which the electronic communication device 100 is ready to execute a video, which is the execution output, is displayed on the display unit 130 of the electronic communication device 100. When a play button is selected in the standby status, the video, which is the execution output, may be executed by the electronic communication device 100.

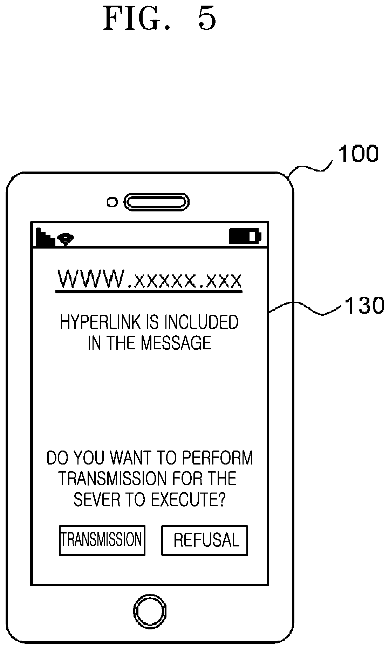

FIG. 5 is a block diagram of a service providing server including a safety module and a processing unit of the safety module according to another embodiment of the present invention. A service providing server 400 shown in FIG. 5 has substantially the same elements as those of the service providing server 200 shown in FIGS. 1 and 2, except for addition of a safety module 540 and a processing unit 545 of the safety module 540, and thus a repetitive description thereof will be omitted.

Referring to FIG. 5, the service providing server 500 includes the safety module 540. The safety module 540 may execute intra-message execution data and execution data of an external device linked by a hyperlink. In detail, the processing unit 545 of the safety module 540 may execute the intra-message execution data or the execution data of the external device linked by the hyperlink. However, when the safety module 540 executes the intra-message execution data or the execution data of the external device linked by the hyperlink, the safety module 540 is blocked or restricted from transmitting and receiving data to and from other modules of the service providing server 500. Here, transmission and reception of data being blocked indicates that the transmission and reception of the data is perfectly impossible, and transmission and reception of data being restricted indicates that the transmission and reception of the data is allowed under only a specified condition in a process of executing intra-message execution data or execution data of an external device linked by a hyperlink to generate an execution output.

The service providing server 500 according to another embodiment of the present invention uses the separate safety module 540 for isolating and executing intra-message execution data or execution data of an external device linked by a hyperlink. In detail, the intra-message execution data or the execution data of the external device linked by the hyperlink is executed by the processing unit 545 of the safety module that is blocked or restricted from transmitting and receiving data to and from the processing unit 210, the communication unit 220, and the storage unit 230 of the service providing server 500. Accordingly, when there is malware in the intra-message execution data or the execution data of the external device linked by the hyperlink, it is possible to prevent the malware from affecting the service providing server 500 although the service providing server 500 executes the intra-message execution data or the execution data of the external device linked by the hyperlink.

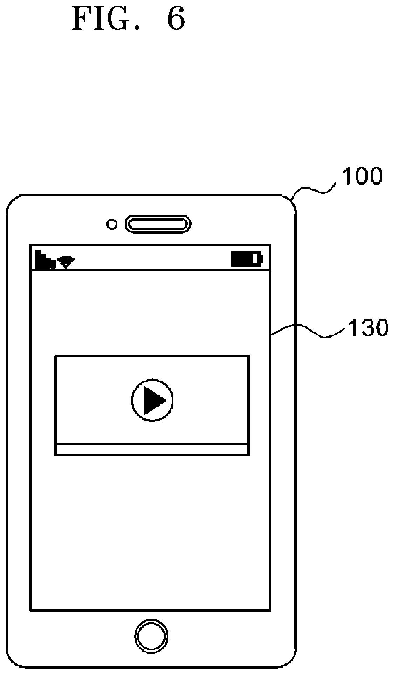

FIG. 6 is a block diagram of a service providing server including a user environment module and a processing unit of the user environment module according to another embodiment of the present invention. A service providing server 600 shown in FIG. 6 has substantially the same elements as those of the service providing server 200 shown in FIGS. 1 and 2, except for addition of a user environment module 650 and a processing unit 655 of the user environment module 650, and thus a repetitive description thereof will be omitted.

Referring to FIG. 6, the service providing server 600 includes the user environment module 650. The user environment module 650 may execute intra-message execution data and execution data of an external device linked by a hyperlink. In detail, the processing unit 655 of the user environment module 650 may execute the intra-message execution data or the execution data of the external device linked by the hyperlink. However, the user environment module 650 may use a separate operating system (OS) and hardware that are different from those of the processing unit 210 of the service providing server 600. For example, the user environment module 650 may be a module that is driven by the same, or similar, environment, that is, the same, or similar, OS and the same, or similar, hardware as those of the processing unit 110 of the electronic communication device 100. The processing unit 655 of the user environment module 650 may execute the intra-message execution data or the execution data of the external device linked by the hyperlink to generate an execution output. Here, the same environment includes substantially the same environment as well as perfectly the same environment, and a similar environment includes almost the same environment.

The service providing server 600 according to another embodiment of the present invention uses the separate user environment module 650 for executing intra-message execution data or execution data of an external device linked by a hyperlink. In detail, the intra-message execution data or the execution data of the external device linked by the hyperlink is executed by the processing unit 655 of the user environment module 650 that provides an environment based on the processing unit 110 of the electronic communication device 100. Accordingly, the processing unit 655 of the user environment module 650 that provides the same or similar OS and hardware as those of the processing unit 110 of the electronic communication device 100 in which the intra-message execution data or the execution data of the external device linked by the hyperlink should be actually executed may execute the intra-message execution data or the execution data of the external device linked by the hyperlink to generate an execution output. Thus, it is possible to solve a problem that may occur when the service providing server 600 and the electronic communication device 100 are configured with different OSes or hardware platforms and also to protect the electronic communication device 100 from malware.

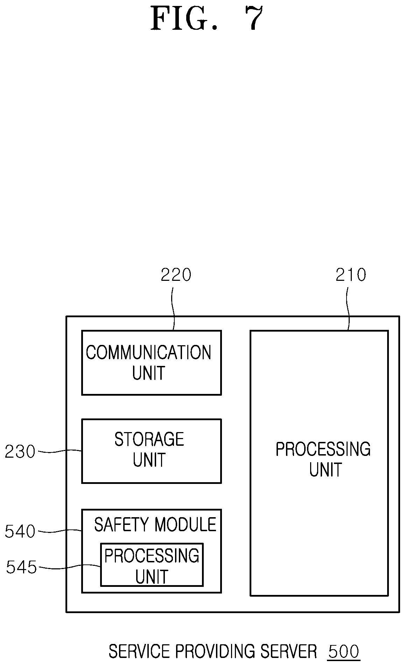

FIG. 7 is a block diagram of an electronic communication device including a closed module and a processing unit of the closed module according to another embodiment of the present invention. An electronic communication device 700 shown in FIG. 7 has substantially the same elements as those of the electronic communication device 100 shown in FIGS. 1 and 2, except for addition of a closed module 740 and a processing unit 750 of the closed module 740, and thus a repetitive description thereof will be omitted.

Referring to FIG. 7, the electronic communication device 700 includes the closed module 740. The closed module 740 may execute intra-message execution data and execution data of an external device linked by a hyperlink. In detail, the processing unit 750 of the closed module 740 may execute the intra-message execution data or the execution data of the external device linked by the hyperlink. However, when the closed module 740 executes the intra-message execution data or the execution data of the external device linked by the hyperlink, the closed module is blocked or restricted from transmitting and receiving data to and from other modules of the electronic communication device 100.

The electronic communication device 700 according to another embodiment of the present invention uses the separate closed module 740 for isolating and executing intra-message execution data or execution data of an external device linked by a hyperlink. In detail, the intra-message execution data or the execution data of the external device linked by the hyperlink is executed by the processing unit 750 of the closed module 740 that is blocked or restricted from transmitting and receiving data to and from the processing unit 110, the communication unit 120, and the display unit 130 of the electronic communication device 700. Accordingly, when there is malware in the intra-message execution data or the execution data of the external device linked by the hyperlink, it is possible to prevent the malware from affecting the electronic communication device 700 although the electronic communication device 700 executes the intra-message execution data or the execution data of the external device linked by the hyperlink. Also, since the electronic communication device 700 autonomously executes the intra-message execution data or the execution data of the external device linked by the hyperlink without using a separate device, it is possible to safely execute the intra-message execution data or the execution data of the external device linked by the hyperlink even when it is difficult to transmit or receive data to or from a separate device.

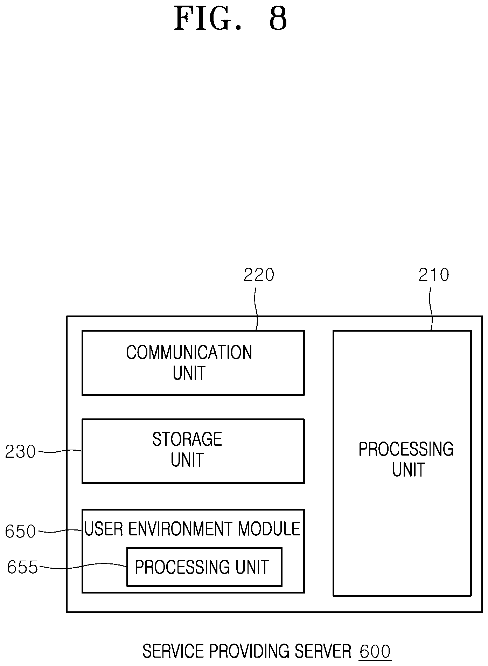

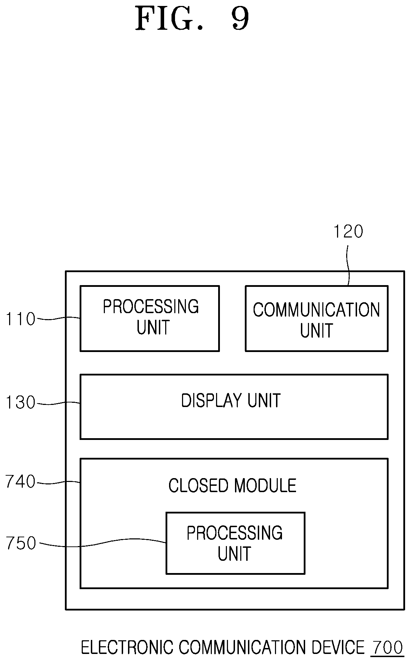

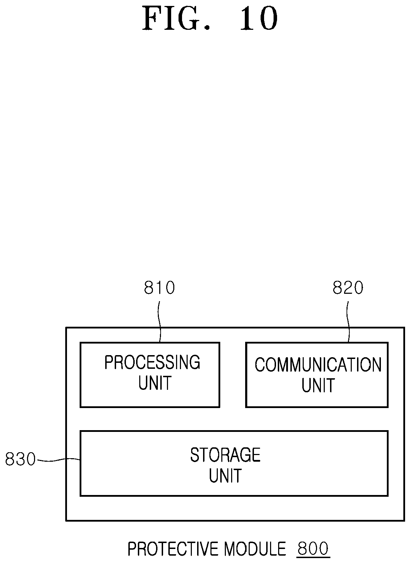

FIG. 8 is a block diagram of a protective module including a processing unit according to another embodiment of the present invention. Referring to FIG. 8, a protective module 800 includes a processing unit 810, a communication unit 820, and a storage unit 830. The processing unit 810 of the protective module 800 performs substantially the same function as that of the processing unit 210 of the service providing server 200 shown in FIGS. 1 and 2. The communication unit 820 of the protective module 800 performs substantially the same function as that of the communication unit 220 of the service providing server 200. The storage unit 830 of the protective module 800 performs substantially the same function as that of the storage unit 230 of the service providing server 200.

The protective module 800 according to another embodiment of the present invention performs substantially the same function as that of the service providing server 200. As a difference between the service providing server 200 and the protective module 800, the service providing server 200 refers to an entire electronic apparatus that serves as a server while the protective module 800 refers to a module that separately has the processing unit 810, the communication unit 820, and the storage unit 830, which is a portion of a specified electronic apparatus.

While embodiments of the present invention have been described in detail above with reference to the accompanying drawings, the present invention is not limited to the embodiments, and various changes and modifications may be made without departing from the technical spirit of the present invention. Therefore, the embodiments disclosed herein are intended not to limit but to describe the technical spirit of the present invention, and the scope of the present invention is not limited to the embodiments. Therefore, the above embodiments are to be regarded as illustrative rather than restrictive. The scope of the invention should be construed by the appended claims, and all technical sprits within the scope of their equivalents should be construed as included in the scope of the invention.

## Claims

1. A protective electronic device comprising:
a communication unit configured to receive at least one of intra-message execution data and a hyperlink by which execution data of an external device is linked, which are included in a target message received by an electronic communication device and executable by the electronic communication device, from the electronic communication device; and
a processing unit configured to execute the intra-message execution data received through the communication unit or the execution data of the external device linked by the hyperlink received through the communication unit, instead of the electronic communication device.

2. The protective electronic device of claim 1, wherein the processing unit transmits an execution output, which is a result of executing the intra-message execution data or the execution data of the external device linked by the hyperlink instead of the electronic communication device, back to the electronic communication device through the communication unit.

3. The protective electronic device of claim 2, wherein when the target message includes the intra-message execution data, the execution output transmitted to the electronic communication device as the result of executing the intra-message execution data is the same as a result of the electronic communication device executing the intra-message execution data.

4. The protective electronic device of claim 2, wherein when the target message includes the hyperlink, the execution output transmitted to the electronic communication device as the result of executing the execution data of the external device linked by the hyperlink is the same as a result of the electronic communication device executing the execution data of the external device linked by the hyperlink.

5. The protective electronic device of claim 2, wherein the execution output is at least one of character data, number data, figure data, image data, video data, sound data, and vibration data.

6. The protective electronic device of claim 1, wherein:
the processing unit comprises a safety module; and
the safety module is blocked or restricted from transmitting data when the safety module executes the intra-message execution data or the execution data of the external device linked by the hyperlink.

7. The protective electronic device of claim 1, wherein the processing unit comprises a determination module configured to determine whether there is malware in the intra-message execution data or the execution data of the external device linked by the hyperlink.

8. The protective electronic device of claim 7, wherein:
the processing unit includes an anti-malware module configured to remove the malware;
the processing unit removes the malware when the malware is present in the intra-message execution data; and
the communication unit transmits a treated execution output, which is a result of executing the execution data from which the malware has been removed, to the electronic communication device.

9. The protective electronic device of claim 7, wherein:
the processing unit includes an anti-malware module configured to remove the malware;
the processing unit removes the malware when the malware is present in the execution data of the external device linked by the hyperlink; and
the communication unit transmits a treated execution output, which is a result of executing the execution data from which the malware has been removed, to the electronic communication device.

10. The protective electronic device of claim 1, wherein:
the processing unit comprises a user environment module, which is a system execution environment based on an execution environment of the electronic communication device; and
the user environment module executes the intra-message execution data or the execution data of the external device linked by the hyperlink.

11. The protective electronic device of claim 1, wherein the intra-message execution data or the hyperlink received through the communication unit is execution data or a hyperlink that is designated to be transmitted to the protective electronic device by a user of the electronic communication device.

12. The protective electronic device of claim 1, wherein the protective electronic device is a service providing server configured to provide a service for protecting the electronic communication device from malware.

13. The protective electronic device of claim 2, wherein:
when the target message includes the intra-message execution data, the execution output transmitted to the electronic communication device as the result of executing the intra-message execution data is at least partially the same as a result of the electronic communication device executing the intra-message execution data; and
when the target message includes the hyperlink, the execution output transmitted to the electronic communication device as the result of executing the execution data of the external device linked by the hyperlink is at least partially the same as a result of the electronic communication device executing the execution data of the external device linked by the hyperlink.

14. An electronic communication device comprising:
a communication unit configured to receive a target message including intra-message execution data and a hyperlink by which execution data of an external device is linked, which are executable by the electronic communication device; and
a processing unit configured to perform a process of transmitting at least one of the intra-message execution data and the hyperlink by which the execution data of the external device is linked by a protective electronic device.

15. The electronic communication device of claim 14, wherein the processing unit performs a process of receiving an execution output, which is a result of executing the intra-message execution data or the execution data of the external device linked by the hyperlink instead of the electronic communication device, from the protective electronic device.

16. The electronic communication device of claim 15, wherein:
when the target message includes the intra-message execution data, the execution output, which is the result of executing the intra-message execution data, is the same as a result of the electronic communication device executing the intra-message execution data; and
when the target message includes the hyperlink, the execution output, which is the result of executing the execution data of the external device linked by the hyperlink, is the same as a result of the electronic communication device executing the execution data of the external device linked by the hyperlink.

17. The electronic communication device of claim 15, wherein:
when the target message includes the intra-message execution data, the execution output, which is the result of executing the intra-message execution data, is at least partially the same as a result of the electronic communication device executing the intra-message execution data; and
when the target message includes the hyperlink, the execution output, which is the result of executing the execution data of the external device linked by the hyperlink, is at least partially the same as a result of the electronic communication device executing the execution data of the external device linked by the hyperlink.

18. An electronic communication device comprising:
a communication unit configured to receive a target message including intra-message execution data and a hyperlink by which execution data of an external device is linked, which are executable by the electronic communication device; and
a closed module configured to execute at least one of the intra-message execution data and the execution data of the external device linked by the hyperlink, wherein
a processing unit of the closed module instead of a processing unit of the electronic communication device executes at least one of the intra-message execution data and the execution data of the external device linked by the hyperlink.

19. The electronic communication device of claim 18, wherein the closed module of the electronic communication device is blocked or restricted from transmitting data to other modules of the electronic communication device when the closed module executes the at least one of the intra-message execution data and the execution data of the external device linked by the hyperlink.

20. The electronic communication device of claim 19, wherein:
when the target message includes the intra-message execution data, the execution output, which is the result of executing the intra-message execution data, is at least partially the same as a result of the electronic communication device executing the intra-message execution data; and
when the target message includes the hyperlink, the execution output, which is the result of executing the execution data of the external device linked by the hyperlink, is at least partially the same as a result of the electronic communication device executing the execution data of the external device linked by the hyperlink.

21. The electronic communication device of claim 15 or 20, wherein the execution output is at least one of character data, number data, figure data, image data, video data, sound data, and vibration data.

22. A protective module for protecting an electronic communication device, the protective module comprising:
a communication unit configured to receive at least one of intra-message execution data and a hyperlink by which execution data of an external device is linked, which are included in a target message received by the electronic communication device and executable by the electronic communication device, from the electronic communication device; and
a processing unit configured to execute at least one of the intra-message execution data received through the communication unit and the execution data of the external device linked by the hyperlink received through the communication unit, instead of the electronic communication device.

23. The protective module of claim 22, wherein the processing unit transmits an execution output, which is a result of executing the intra-message execution data or the execution data of the external device linked by the hyperlink instead of the electronic communication device, to the electronic communication device other than the protective module.

24. The protective module of claim 22, wherein:
the processing unit comprises a safety module; and
the safety module is blocked or restricted from transmitting data when the safety module executes the intra-message execution data or the execution data of the external device linked by the hyperlink.

25. The protective module of claim 23, wherein when the target message includes the intra-message execution data, the execution output transmitted to the electronic communication device as the result of executing the intra-message execution data is the same as a result of the electronic communication device executing the intra-message execution data.

26. The protective module of claim 23, wherein when the target message includes the hyperlink, the execution output transmitted to the electronic communication device as the result of executing the execution data of the external device linked by the hyperlink is the same as a result of the electronic communication device executing the execution data of the external device linked by the hyperlink.

27. The protective module of claim 23, wherein:
when the target message includes the intra-message execution data, the execution output, which is the result of executing the intra-message execution data, is at least partially the same as a result of the electronic communication device executing the intra-message execution data; and
when the target message includes the hyperlink, the execution output, which is the result of executing the execution data of the external device linked by the hyperlink, is at least partially the same as a result of the electronic communication device executing the execution data of the external device linked by the hyperlink.

28. The protective module of claim 23, wherein the execution output is at least one of character data, number data, figure data, image data, video data, sound data, and vibration data.

29. A method of protecting an electronic communication device, the method comprising:
receiving, by a protective electronic device, at least one of intra-message execution data and a hyperlink by which execution data of an external device is linked, which are included in a target message received by the electronic communication device, from the electronic communication device; and
executing, by the protective electronic device instead of the electronic communication device, at least one of the intra-messages execution data and the execution data of the external device linked by the hyperlink.

30. The method of claim 29, further comprising transmitting an execution output, which is a result of executing the intra-message execution data or the execution data of the external device linked by the hyperlink instead of the electronic communication device, back to the electronic communication device.

31. The method of claim 30, wherein:
when the target message includes the intra-message execution data, the execution output is the same as a result of the electronic communication device executing the intra-message execution data; and
when the target message includes the hyperlink, the execution output is the same as a result of the electronic communication device executing the execution data of the external device linked by the hyperlink.

32. The method of claim 30, wherein the execution output is at least one of character data, number data, figure data, image data, video data, sound data, and vibration data.

33. The method of claim 29, wherein the executing comprises executing, by a safety module of the protective electronic device, the intra-message execution data or the execution data of the external device linked by the hyperlink, wherein
the safety module of the protective electronic device is blocked or restricted from transmitting data to other modules of the protective electronic device when the safety module of the protective electronic device executes the intra-message execution data or the execution data of the external device linked by the hyperlink.

34. The method of claim 29, further comprising determining, by the protective electronic device, whether there is malware in the intra-message execution data or the execution data of the external device linked by the hyperlink.

35. The method of claim 34, further comprising, when the malware is present in the intra-message execution data:
removing the malware; and
transmitting a treated execution data, which is a result of executing the execution data from which the malware has been removed, to the electronic communication device.

36. The method of claim 34, further comprising, when the malware is present in the execution data of the external device linked by the hyperlink:
removing the malware; and
transmitting a treated execution data, which is a result of executing the execution data of the external device linked by the hyperlink from which the malware has been removed, to the electronic communication device.

37. The method of claim 29, wherein the executing by the protective electronic device is performed by a user environment module of the protective electronic device, which is a system execution environment based on an execution environment of the electronic communication device.

38. The method of claim 29, wherein the intra-message execution data or the hyperlink is execution data or a hyperlink that is designated to be transmitted to the protective electronic device by a user of the electronic communication device.

39. The method of claim 30, wherein:
when the target message includes the intra-message execution data, the execution output is at least partially the same as a result of the electronic communication device executing the intra-message execution data; and
when the target message includes the hyperlink, the execution output is at least partially the same as a result of the electronic communication device executing the execution data of the external device linked by the hyperlink.

40. A method of protecting an electronic communication device, the method comprising:
receiving a target message from an electronic communication device having a communication function; and
transmitting at least one of intra-message execution data and a hyperlink by which execution data of an external device is linked, which are included in the target message and executable by the electronic communication device, to a protective electronic device without executing the intra-message execution data or the hyperlink.

41. The method of claim 40, further comprising receiving an execution output, which is a result of the protective electronic device instead of the electronic communication device executing the intra-message execution data or the execution data of the external device linked by the hyperlink, from the protective electronic device.

42. The method of claim 41, wherein when the target message includes the intra-message execution data, the execution output, which is the result of executing the intra-message execution data, is the same as a result of the electronic communication device executing the intra-message execution data.

43. The method of claim 41, wherein when the target message includes the hyperlink, the execution output, which is the result of executing the execution data of the external device linked by the hyperlink, is the same as a result of the electronic communication device executing the execution data of the external device linked by the hyperlink.

44. The method of claim 41, wherein the execution output is at least one of character data, number data, figure data, image data, video data, sound data, and vibration data.

45. The method of claim 40, further comprising receiving, by the electronic communication device, whether to transmit the intra-message execution data or the hyperlink by which the execution data of the external device is linked by the protective electronic device.

46. A method of protecting an electronic communication device, the method comprising:
receiving, by an electronic communication device having a closed module, a target message;
transmitting at least one of intra-message execution data and a hyperlink by which external data of an external device is linked, which are included in the target message and executable by the electronic communication device, to the closed module of the electronic communication device; and
executing, by the closed module of the electronic communication device instead of a processing unit of the electronic communication device, at least one of the intra-message execution data and the execution data of the external device linked by the hyperlink.

47. The method of claim 46, further comprising transmitting, by the closed module of the electronic communication device, an execution output, which is a result of the closed module executing the intra-message execution data or the execution data of the external device linked by the hyperlink, to the outside of the closed module of the electronic communication device.

48. The method of claim 46, wherein the closed module of the electronic communication device is blocked or restricted from transmitting data to other modules of the electronic communication device when the closed module executes the intra-message execution data or the execution data of the external device linked by the hyperlink.

49. A method of protecting an electronic communication device, the method comprising:
receiving at least one of intra-message execution data and a hyperlink by which execution data of an external device is linked, which are included in a target message received by the electronic communication device and executable by the electronic communication device, from the electronic communication device; and
executing at least one of the intra-message execution data received from the electronic communication device and the execution data of the external device linked by the hyperlink received from the electronic communication device, instead of the electronic communication device.

50. The method of claim 49, further comprising transmitting an execution output, which is a result of executing the intra-message execution data or the execution data instead of the electronic communication device, to the electronic communication device other than a protective module.

51. A protective system comprising:
an electronic communication device including a communication unit and a processing unit; and
a protective electronic device including a communication unit and a processing unit, wherein:
the communication unit of the electronic communication device receives a target message;
the processing unit of the electronic communication device does not execute intra-message execution data and a hyperlink by which execution data of an external device is linked, which are included in the target message and executable by the electronic communication device, and performs a process of transmitting at least one of the intra-message execution data and the hyperlink by which the execution data of the external device is linked to the protective electronic device;
the communication unit of the protective electronic device receives the at least one of the intra-message execution data and the hyperlink by which the execution data of the external device is linked from the electronic communication device; and
the processing unit of the protective electronic device instead of the electronic communication device executes the intra-message execution data received from the electronic communication device and the execution data of the external device linked by the hyperlink received from the electronic communication device.

52. The protective system of claim 51, wherein the processing unit of the electronic communication device performs a process of receiving an execution output, which is a result of the protective electronic device instead of the electronic communication device executing the intra-message execution data or the execution data of the external device linked by the hyperlink, from the protective electronic device.

53. A protective system comprising an electronic communication device including a communication unit and a processing unit, wherein
the communication unit of the electronic communication device receives a target message including intra-message execution data or a hyperlink by which execution data of an external device is linked, which is executable by the electronic communication device;
a closed module of the electronic communication device executes at least one of the intra-message execution data and the execution data of the external device linked by the hyperlink; and
a processing unit of the closed module instead of the processing unit of the electronic communication device executes the at least one of the intra-message execution data and the execution data of the external device linked by the hyperlink.

54. The protective system of claim 53, wherein the closed module of the electronic communication device is blocked or restricted from transmitting data to other modules of the electronic communication device when the closed module executes the at least one of the intra-message execution data and the execution data of the external device linked by the hyperlink.

55. A protective system including a communication unit and a processing unit, wherein:
the communication unit of the protective system receives at least one of intra-message execution data and a hyperlink by which execution data of an external device is linked, which are included a target message received by an electronic communication device and executable by the electronic communication device; and
the processing unit of the protective system instead of the electronic communication device executes at least one of the intra-message execution data received through the communication unit and the execution data of the external device linked by the hyperlink received through the communication unit.

56. The protective system of claim 55, wherein the processing unit transmits an execution output, which is a result of executing the intra-message execution data or the execution data of the external device linked by the hyperlink instead of the electronic communication device, to the electronic communication device other than a protective module.

57. A computer-readable recording medium having a program for protecting an electronic communication device stored therein, wherein:
a protective electronic device receives at least one of intra-message execution data and a hyperlink by which execution data of an external device is linked, which are included in a target message received by the electronic communication device and executable by the electronic communication device, from the electronic communication device; and
the protective electronic device instead of the electronic communication device executes at least one of the intra-messages execution data and the execution data of the external device linked by the hyperlink.

58. The computer-readable recording medium of claim 57, wherein the protective electronic device transmits an execution output, which is a result of the protective electronic device instead of the electronic communication device executing the intra-message execution data or the execution data of the external device linked by the hyperlink, to the electronic communication device.

59. A computer-readable recording medium having a program for protecting an electronic communication device stored therein, wherein:
an electronic communication device receives a target message including intra-message execution data and a hyperlink by which execution data of an external device is linked, which are executable by the electronic communication device; and
the electronic communication device transmits at least one of the intra-message execution data and the hyperlink by which the execution data of the external device is linked by a protective electronic device.

60. The computer-readable recording medium of claim 59, wherein the protective electronic device performs a process of enabling the electronic communication device to receive an execution output, which is a result of the protective electronic device instead of the electronic communication device executing the intra-message execution data or the execution data of the external device linked by the hyperlink.

61. A computer-readable recording medium having a program for protecting an electronic communication device stored therein, wherein:
an electronic communication device receives a target message including intra-message execution data and a hyperlink by which execution data of an external device is linked, which are executable by the electronic communication device;
the electronic communication device includes a closed module configured to execute at least one of the intra-message execution data and the execution data of the external device linked by the hyperlink; and
a processing unit of the closed module instead of a processing unit of the electronic communication device executes at least one of the intra-message execution data and the execution data of the external device linked by the hyperlink.

62. The computer-readable recording medium of claim 61, wherein the closed module of the electronic communication device is blocked or restricted from transmitting data to other modules of the electronic communication device when the closed module executes at least one of the intra-message execution data and the execution data of the external device linked by the hyperlink.

63. A computer-readable recording medium having a program for protecting an electronic communication device stored therein, wherein:
a protective module receives at least one of intra-message execution data and a hyperlink by which execution data of an external device is linked, which are included in a target message received by the electronic communication device and executable by the electronic communication device, from the electronic communication device; and
the protective module instead of the electronic communication device executes at least one of the received intra-messages execution data and the execution data of the external device linked by the received hyperlink.

64. The computer-readable recording medium of claim 63, wherein the protective module transmits an execution output, which is a result of the protective module instead of the electronic communication device executing the intra-message execution data or the execution data of the external device linked by the hyperlink, to the electronic communication device other than the protective module.
